# EUROPEAN PATENT APPLICATION

(11) **EP 4 603 927 A1**
(43) Date of publication of application: **20.08.2025**
(21) Application number: 23876147.2
(22) Date of filing: 28.04.2023
(51) Int. Cl.: G05B 19/042

(54) **SELF-CHECKING-BASED FIRE-FIGHTING AIR INTAKE AND DISCHARGE CONTROL SYSTEM, AND CONTROL METHOD**

(30) Priority: 11.10.2022 CN 202211241728
(71) Applicant: Sungrow Power Supply Co., Ltd., Hefei, Anhui 230088 (CN)
(72) Inventor: LIU, Zhongqi, Hefei, Anhui 230088 (CN); CHEN, Fei, Hefei, Anhui 230088 (CN); WANG, Lin, Hefei, Anhui 230088 (CN); YAN, Jiabin, Hefei, Anhui 230088 (CN)
(74) Representative: Zacco Norway AS
(86) International application number: PCT/CN2023/091619
(87) International publication number: WO 2024/077936

(57) **Abstract**

A self-checking-based fire-fighting air intake and discharge control system, which is applied to measure a combustible gas in an energy storage container (40). The fire-fighting air intake and discharge control system comprises: a gas measurement module (11), which is used for measuring the concentration of a combustible gas in an energy storage container (40); an air intake and discharge module (12), which is used for controlling the circulation of the gas in the energy storage container (40); and a control module (10), which is used for controlling the operation of the gas measurement module (11) and the operation of the air intake and discharge module (12), and controlling, when the concentration of the combustible gas exceeds a preset concentration threshold value, the air intake and discharge module (12) to discharge the combustible gas. The fire-fighting air intake and discharge control system can automatically detect a fault problem of the system and feed back same in a timely manner, and can also measure multiple environmental factors; and the system regularly performs self-checking, and stores and uploads data, and an operation and maintenance person can retrieve operation data, predetermines an on-site operation situation, and maintains the system and a device.

## Description

This application claims the priority to Chinese Patent Application No. 202211241728.4, titled "SELF-CHECKING-BASED FIRE-FIGHTING AIR INTAKE AND DISCHARGE CONTROL SYSTEM, AND CONTROL METHOD", filed with the China National Intellectual Property Administration on October 11, 2022, the entire disclosure of which is incorporated herein by reference.

### FIELD

The present application relates to the technical field of gas intake and discharge control for fire-fighting, and in particular to a self-checking fire-fighting gas intake and discharge control system and a control method thereof.

### BACKGROUND

With the rapid development of energy storage, battery cell safety has drawn increasing attention. Thermal runaway is the most severe risk in battery cell safety, and overcharging and over-discharging are the most common causes of battery cell failures. With the current level of technology, it is impossible to completely avoid these issues. In existing energy storage systems, although battery cell temperature detection has become widespread, cooling, as a passive means, cannot prevent the generation of combustible gas, and thus cannot prevent explosions caused by combustible gas with excessive concentration.

Electrochemical energy storage uses chemical elements as energy storage media to store energy through chemical reactions or changes of the energy storage media. Batteries are mainly used as energy carriers on the market for electrochemical energy storage, and lithium batteries, especially lithium iron phosphate batteries, are one of the main choices in the energy storage industry with broad application prospects.

When the lithium-ion batteries are overcharged or experience thermal runaway, the high temperature may cause the decomposition of an SEI film on the anode, the decomposition of active materials on the cathode, and the oxidative decomposition of the electrolyte, generating a large amount of gas. Researches have shown that CO₂, CO, H₂, C₂H₄, CH₄, C₂H₆ and C₃H₆ are the seven most common gases produced in thermal runaway of the lithium-ion batteries. Among them, H₂ (hydrogen) and CO (carbon monoxide) account for more than 70%.

In the energy storage systems, the battery cells are assembled and stacked (mainly in the form of battery cabinets or containers) to achieve the corresponding energy storage capacity. Larger battery capacity requires more battery cells, which increases the risk of thermal runaway. According to the NFPA855 *Standard for the Installation of Stationary Energy Storage Systems,* the combustible gas concentration should be lower than 25% of the upper limit of the combustible gas in the space. Hence, it is necessary to install a fire-fighting gas intake and discharge device. When the combustible gas concentration in the container falls within a certain range, the fire-fighting gas intake and discharge system is started to promptly discharge the combustible gas out of the container.

A mainstream solution on the market at present involves mounting a combustible gas detector and the fire-fighting gas intake and discharge device, which are interconnected, in the energy storage container. The combustible gas detector issues an alarm message when detecting excessively high combustible gas concentration. When receiving (or indirectly receiving) the message, the gas intake and discharge device starts to operate until the combustible gas concentration returns to an acceptable level.

Most existing technologies have the following problems. The system is open-looped. The mainstream fire-fighting gas intake and discharge device on the market mainly consists of an automatic louver, a fan, and a control board (same components are provided for both gas intake and discharge). A control system can start or stop the device, but cannot monitor an operating state of the device. During operation of the system, if the fan is stalled, the automatic louver fails to open, or other control problems occur, the system cannot perform related protective actions. This may cause failure of the device, and even result in more severe safety hazards.

Environmental information cannot be recorded in real time. In the on-site application environment, if the fire-fighting gas intake and discharge system is activated, there may be safety hazards in the energy storage container, and a maintenance worker will arrive on site to troubleshoot the fault. However, by the time the maintenance worker arrives, it is possible that the fire-fighting fan has stopped and the fault has temporarily disappeared. In this case, it is necessary to re-check to locate the fault.

The robustness is low. The fire-fighting gas intake and discharge device is not configured to operate stably for a long term after installation. In most cases, the device may not be used throughout the entire lifecycle of the energy storage system. Therefore, it is an uncontrollable risk whether the system can still operate stably after a long period of inactivity.

The type of detection is limited. Most existing gas intake and discharge fans only detect combustible gases, but do not detect the humidity in the container. Under most conditions, the energy storage container may not be completely waterproof. Excessively high internal humidity may also cause safety hazards.

The versatility is low. Most gas intake and discharge systems for containers on the market are specific to a single type of container. Different containers require different systems with customized sizes and functions, which not only makes installation and maintenance inconvenient, but also increases the cost of use.

### SUMMARY

A fire-fighting gas intake and discharge control system and a control method thereof are provided according to the present application, which can automatically detect system faults and provide timely feedback while detecting various environmental factors and being applicable to most gas intake and discharge devices of containers.

To achieve the above object and other related objects, a self-checking fire-fighting gas intake and discharge control system for combustible gas detection in an energy storage container is provided according to the present application, including gas detection. The fire-fighting gas intake and discharge control system includes: a gas detection module configured to detect a combustible gas concentration in the energy storage container; a gas intake and discharge module configured to control ventilation in the energy storage container; and a control module configured to control operations of the gas detection module and the gas intake and discharge module, and control the gas intake and discharge module to discharge a combustible gas in a case that the combustible gas concentration exceeds a preset concentration threshold.

According to a specific embodiment of the present application, the fire-fighting gas intake and discharge control system further includes an operation detection module and an alarm module. The operation detection module is configured to detect an operation state of the gas intake and discharge module. The control module is further configured to control the alarm module to alarm in a case that the gas intake and discharge module operates abnormally.

According to a specific embodiment of the present application, the gas intake and discharge module is mounted in the energy storage container, and includes a louver device and a fan device.

According to a specific embodiment of the present application, the operation detection module includes a louver detection submodule and a fan detection submodule. The louver detection submodule is configured to determine the operation state of the gas intake and discharge module by detecting a state of a louver of the louver device. The fan detection submodule is configured to determine the operation state of the gas intake and discharge module by detecting current information and rotation speed information of the fan device.

According to a specific embodiment of the present application, the louver detection submodule is configured to determine whether the louver is in an open state or a closed state by detecting a moving distance of a louver connecting rod of the louver device through a position sensor.

According to a specific embodiment of the present application, the fan detection submodule is configured to monitor, through a current sensor provided on a power cable of a fan and a rotation speed feedback wire provided between a fan controller and the fan, a current value variation and a rotation speed variation of the fan device, to determine whether the fan device operates normally.

According to a specific embodiment of the present application, the fire-fighting gas intake and discharge control system further includes a temperature detection module configured to detect a temperature in the energy storage container and a humidity detection module configured to detect humidity in the energy storage container. The control module is further configured to control the gas intake and discharge module to operate in a case that the temperature exceeds a preset temperature threshold and/or the humidity exceeds a preset humidity range.

According to a specific embodiment of the present application, the fire-fighting gas intake and discharge control system further includes a communication module. The control module is configured to receive commands from an exterior through the communication module, and send state information of the energy storage container to the exterior. The commands from the exterior include an operation command for controlling the gas intake and discharge module, and operation commands for controlling the gas detection module, the operation detection module, and the temperature detection module and/or the humidity detection module. The state information includes the combustible gas concentration, the temperature in the energy storage container, the humidity in the energy storage container and the operation state of the gas intake and discharge module.

According to a specific embodiment of the present application, the control module is further configured to control the alarm module to alarm in a case that a communication abnormality occurs in the communication module.

According to a specific embodiment of the present application, the control module is configured to control operations of the gas intake and discharge module, the gas detection module, the operation detection module, and the temperature detection module and/or the humidity detection module according to the commands from the exterior received by the communication module. Or, the control module is configured to control the operations of the gas intake and discharge module, the gas detection module, the operation detection module, and the temperature detection module and/or the humidity detection module at a preset time interval.

A control method of the self-checking fire-fighting gas intake and discharge system according to any one of the above solutions includes: obtaining real-time data of the combustible gas concentration collected by the gas detection module; sending, by the control module in a case that the combustible gas concentration is higher than the preset concentration threshold, a control command to the gas intake and discharge module to control the gas intake and discharge module to discharge the combustible gas; obtaining real-time data of the operation state of the gas intake and discharge module collected by the operation detection module; and alarming by the alarm module in a case that the operation state is abnormal.

According to a specific embodiment of the present application, the control method further includes: obtaining real-time data of an ambient temperature collected by a temperature detection module; in a case that the ambient temperature is lower than a preset temperature threshold and the combustible gas concentration is higher than the preset concentration threshold, sending, by the control module, the control command to the gas intake and discharge module to control the gas intake and discharge module to discharge the combustible gas; and in a case that the ambient temperature is higher than the preset temperature threshold, sending, by the control module, another control command to a fire extinguishing module to control the fire extinguishing module to perform cooling or fire extinguishing, and alarming by the alarm module.

According to a specific embodiment of the present application, the control method further includes: obtaining real-time data of ambient humidity collected by a humidity detection module; and sending, by the control module in a case that the ambient humidity is higher than a preset humidity threshold, another control command to the gas intake and discharge module to control the gas intake and discharge module to perform ventilation.

The control method for the self-checking fire-fighting gas intake and discharge control system is further provided according to the present application, which realizes the control of the gas intake and discharge module and the real-time monitoring of the operation state of the gas intake and discharge module, so that the system can operate more stably and reliably.

The fire-fighting gas intake and discharge control system of the present application is safer, more reliable, more versatile, and has a competitive cost compared with existing fans on the market.

### BRIEF DESCRIPTION OF THE DRAWINGS

FIG. 1 is a schematic diagram of a fire-fighting gas intake and discharge control system in practice according to an embodiment of the present application;
FIG. 2 is a structural schematic view of the fire-fighting gas intake and discharge control system being applied to an energy storage container according to a specific embodiment of the present application;
FIG. 3 is another structural schematic view of the fire-fighting gas intake and discharge control system being applied to the energy storage container according to a specific embodiment of the present application; and
FIG. 4 is a schematic flowchart of a control method of the fire-fighting gas intake and discharge control system according to a specific embodiment of the present application.

### DETAILED DESCRIPTION OF THE EMBODIMENTS

The embodiments of the present application are described hereinafter through specific examples, and those skilled in the art can easily understand other advantages and effects of the present application from the contents disclosed in this specification. The present application can also be implemented or applied through other different specific embodiments, and various modifications or changes may be made to the details in this specification based on different viewpoints and applications without departing from the spirit of the present application. It should be noted that the following embodiments and features in the embodiments can be combined with each other without conflict.

It should be noted that the drawings provided in the following embodiments are only used to illustrate the basic concept of the present application in a schematic manner, and therefore the drawings only show components related to the present application rather than being drawn according to the number, shape and size of components in actual implementation. In actual implementation, the shape, quantity and proportion of each component may be changed arbitrarily, and the component layout may also be more complicated.

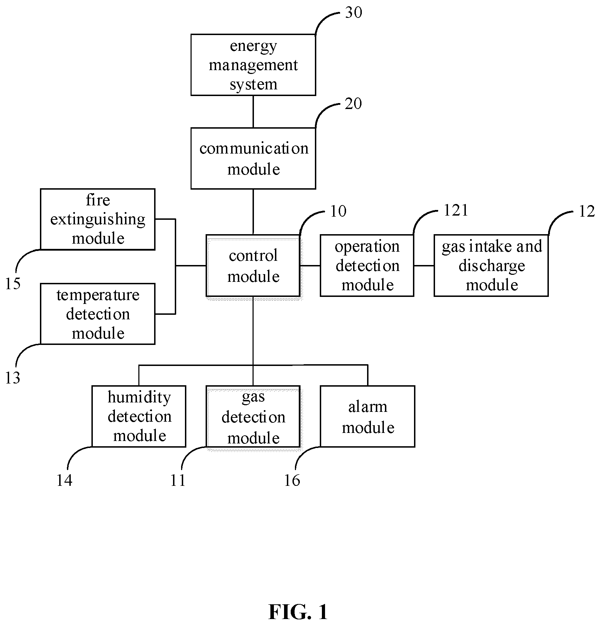

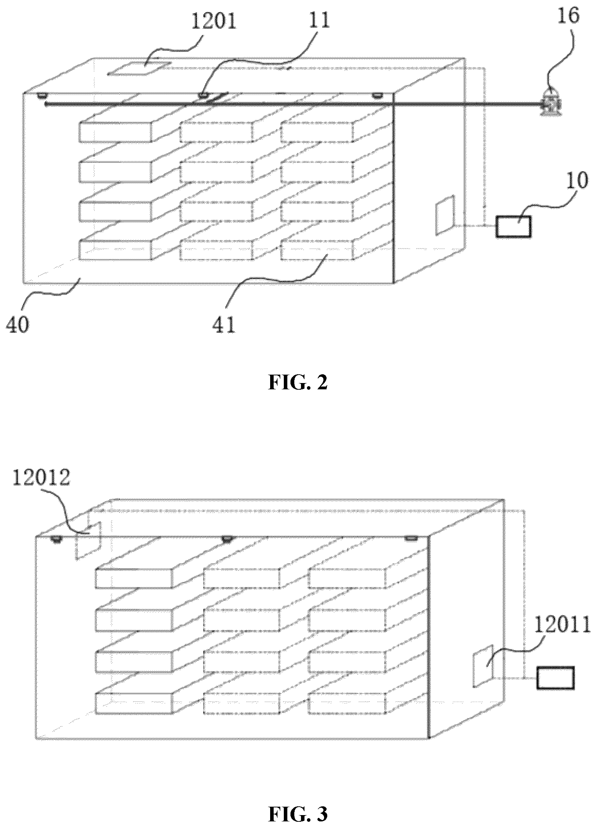

Referring to FIGS. 1 to 3, a self-checking fire-fighting gas intake and discharge control system, configured for combustible gas detection in an energy storage container, includes: a gas detection module 11 being mounted in the energy storage container 40, where the gas detection module 11 is electrically connected to the control module 10 and configured to detect a combustible gas concentration in the energy storage container 40; a gas intake and discharge module 12 being mounted on a body of the energy storage container 40, where the gas intake and discharge module 12 is electrically connected to the control module 10 and configured to control ventilation in the energy storage container 40; a control module 10 being configured to control operations of the gas detection module 11 and the gas intake and discharge module 12, and control the gas intake and discharge module 12 to discharge the combustible gas when the combustible gas concentration exceeds a preset concentration threshold.

The fire-fighting gas intake and discharge control system further includes an operation detection module 121 arranged between the control module 10 and the gas intake and discharge module 12, and the operation detection module 121 is configured to monitor an operation state of the gas intake and discharge module 12 in real time. The control module 10, the gas detection module 11, the gas intake and discharge module 12 and the operation detection module 121 form a closed-loop fire-fighting gas intake and discharge control system, which realizes self-detection of system faults, thereby improving the reliability of the fire-fighting gas intake and discharge control system.

An alarm module 16 is further provided, which is mounted on the body of the energy storage container 40. The control module 10 is also configured to control the alarm module 16 to alarm when the gas intake and discharge module 12 operates abnormally. Normally, the system does not operate. When the gas detection module 11 detects that the combustible gas concentration reaches the preset concentration threshold, the system is activated, and the gas intake and discharge module 12 is controlled to be started. During operation, the gas intake and discharge module 12 records and uploads a current time, the combustible gas concentration, a control command signal of the control module 10, and the operation state of the gas intake and discharge module 12, so as to ensure that a maintenance worker at the site is informed of data information of the state of the system in real time.

According to a specific embodiment, the gas intake and discharge module 12 is mounted inside the energy storage container 40, and includes a louver device 1201 and a fan device (not shown in the drawings) that cooperate with each other to perform air circulation. Further, the operation detection module 121 includes a louver detection submodule (not shown in the drawings) and a fan detection submodule (not shown in the drawings). The louver detection submodule is configured to determine the operation state of the gas intake and discharge module 12 by detecting a state of a louver of the louver device 1201. The fan detection submodule is configured to determine the operation state of the gas intake and discharge module 12 by detecting current information and rotation speed information of the fan device.

The louver detection submodule is able to determine whether the louver is in an open state or a closed state by detecting a moving distance of a louver connecting rod of the louver device 1201 through a position sensor. Specifically, in applications, the position sensor is arranged above or below the louver connecting rod. When the louver moves, a distance between the louver connecting rod and the position sensor is detected. If the distance between the louver connecting rod and the position sensor is less than a preset distance threshold, the position sensor detects that the louver is in the closed state. If the distance between the louver connecting rod and the position sensor is greater than the preset distance threshold, the position sensor detects that the louver is in the open state. In practice, the number and position of the position sensor may not be limited to the solution described in the present embodiment. The number of the position sensor may be one or more according to actual application environment.

The fan detection submodule is configured to monitor, through a current sensor provided on a power cable of a fan and a rotation speed feedback wire provided between a fan controller and the fan, a current value variation and a rotation speed variation of the fan device respectively, to determine whether the fan device operates normally. Specifically, in applications, when the system operates, the fan may feed a rotation speed signal back to the fan detection submodule through the rotation speed feedback wire, and the current sensor may feed a current signal of the operating fan back to the fan detection submodule. The fan detection submodule determines whether the fan operates normally according to a rotation speed and a current of the fan. When the fan operates normally, a high resistance of fan blades results in low rotation speed of the fan, while the current of the fan is large at this time. When the fan is stalled, the current is maximal. The fan detection submodule determines whether the fan operates normally according to a preset rotation speed threshold and a preset current threshold. When one of the detection results is too high or too low, or the current and the rotation speed do not match each other, the fan detection submodule determines that the fan is faulty.

In a specific embodiment, the self-checking fire-fighting gas intake and discharge control system further includes a temperature detection module 13 mounted in the energy storage container 40. The temperature detection module 13 is electrically connected to the control module 10, and is configured to monitor an ambient temperature in the energy storage container 40 in real time. In a case that the ambient temperature monitored by the temperature detection module 13 does not exceed a preset temperature threshold, and the combustible gas concentration monitored by the gas detection module 11 exceeds the preset concentration threshold, the control module 10 controls the gas intake and discharge module 12 to start operating to discharge the combustible gas. Further, a fire extinguishing module 15 is provided, which is mounted in the energy storage container 40, the fire extinguishing module 15 is connected to the control module 10. When the temperature detection module 13 detects abnormality, the control module 10 controls the fire extinguishing module 15 to start operating to perform cooling or fire extinguishing. In a case that the ambient temperature monitored by the temperature detection module 13 exceeds the preset temperature threshold, and the combustible gas concentration monitored by the gas detection module 11 exceeds the preset concentration threshold, the control module 10 controls the fire extinguishing module 15 to start operating, to perform cooling or fire extinguishing.

A humidity detection module 14 is mounted in the energy storage container 40. The humidity detection module 14 is electrically connected to the control module 10 and is configured to monitor ambient humidity in the energy storage container 40 in real time. When the ambient humidity monitored by the humidity detection module 14 exceeds a preset humidity threshold, the control module 10 controls the gas intake and discharge module 12 to start operating to perform ventilation.

In a specific embodiment, the self-checking fire-fighting gas intake and discharge control system further includes a communication module 20 connected to the control module 10. The control module 10 is configured to receive control commands from an energy management system (EMS) 30 through the communication module 20, and send state information of the energy storage container to the EMS 30 and the cloud. The control module 10 is further configured to control the alarm module 16 to alarm when a communication abnormality occurs in the communication module 20. The control commands includes an operation command for controlling the gas intake and discharge module 12, and operation commands for controlling the gas detection module 11, the operation detection module 121, and the temperature detection module 13 and/or the humidity detection module 14. The state information includes the combustible gas concentration, the temperature in the energy storage container 40, the humidity in the energy storage container 40 and the operation state of the gas intake and discharge module 12. Further, the EMS 30 is able to control the gas intake and discharge module 12, when the combustible gas concentration monitored by the gas detection module 11 does not exceed the preset concentration, the EMS 30 may control the gas intake and discharge module 12 to be started or closed.

Once the gas intake and discharge module 12 fails to operate normally, the control module 10 also controls the alarm module 16 to alarm, and reports this state information to the EMS 30 in time. The alarm module 16 will alarm in different ways according to different types of faults. Even if not seeing the fault state information reported to the EMS 30, the maintenance worker at the site can still primarily determine the fault type based on the way the alarm module 16 alarms.

In a specific embodiment, the communication module 20 employs the TCP/IP for data transmission. Specifically, in applications, an upper-level management system actively communicates with the fire-fighting gas intake and discharge control system, and detects whether the system operates abnormally in a pulsed manner. If the system cannot normally respond to the pulse information during a certain period of time, then the communication of the system is determined as abnormal. The fire-fighting gas intake and discharge control system will transmit fault information to the upper-level management system.

In a specific embodiment, the fire-fighting gas intake and discharge control system is further provided with an operation indicator (not shown in the drawings). When the system operates normally, the operation indicator displays normally. If the system has problems such as freezing, the operation indicator alerts.

In a specific embodiment, the control module 10 is provided with a timed detection function. The control module 10 starts and stops the gas intake and discharge module 12 at intervals. When the louver device 1201 and the fan device operate, the operation detection module 121 monitors all the state information. If an abnormality (for example, the automatic louver cannot be opened, the fan is stalled, input and output signals are abnormal, etc.) is found, the state of the gas intake and discharge control system at this moment will be recorded and the data information will be transmitted to the EMS 30, and the alarm module 16 will alarm, to avoid possible faults of the louver device 1201, the fan device and the system information transmission due to lack of operation after a long time, thus increasing safety and reliability.

In a specific embodiment, the louver device 1201 includes an intake louver 12011 and a discharge louver 12012. The intake louver 12011 is arranged at a position, close to a bottom of the body, on a side of the body of the energy storage container 40. The discharge louver 12012 is arranged on a top of the body of the energy storage container 40, or arranged at a position, relatively close to the top, of a side of the body of the energy storage container 40.

Specifically, in applications, the most basic function of the fire-fighting gas intake and discharge control system is to discharge the combustible gas in the energy storage container 40, which mainly includes CO₂, CO, H₂, C₂H₄, CH₄, C₂H₆ and C₃H₆. Among these gases, H₂ and CO are mainly produced, with a total proportion of more than 70%. These two gases have lower densities than air, and therefore will float to the upper level in the energy storage container 40 once being produced. Hence, the discharge louver 12012 is mounted at an upper portion of the energy storage container 40, and the intake louver 12011 is mounted at a lower portion of the energy storage container 40. Correspondingly, the gas detection module 11 is also arranged at the upper portion of the container.

It is further considered that some energy storage containers 40 have a separate battery compartment 41 to prevent water from reaching a position where a battery pack is mounted. Therefore, the discharge louver 12012 may also be mounted at a position of the body of the energy storage container 40 facing a side of the battery compartment 41.

In a specific embodiment, the numbers of input and output ports of the louver device 1201 and the fan device may be customized according to needs. If the numbers of the input and output ports are large, the control module 10 may have a relatively large size, and thus may be separately arranged inside or outside the energy storage container 40. If the numbers of the input and output ports are small, the control module 10 may have a relatively small size, and thus may be mounted in the louver device 1201 or the fan device.

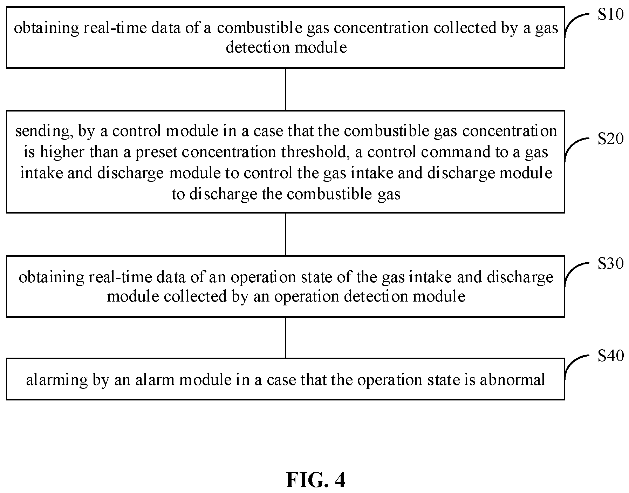

Referring to FIG. 4, a control method of the self-checking fire-fighting gas intake and discharge control system is further provided according to the present application, including the following steps.

In step S10, real-time data of the combustible gas concentration collected by the gas detection module is obtained.

In step S20, in a case that the combustible gas concentration is higher than the preset concentration threshold, the control module sends a control command to the gas intake and discharge module to control the gas intake and discharge module to discharge the combustible gas.

In step S30, real-time data of the operation state of the gas intake and discharge module collected by the operation detection module is obtained.

In step S40, in a case that the operation state is abnormal, the alarm module alarms.

In a specific embodiment, the control method further includes the following steps.

In step S21, real-time data of the ambient temperature collected by the temperature detection module is obtained. In a case that the ambient temperature is lower than a preset temperature threshold and the combustible gas concentration is higher than the preset concentration threshold, the control module sends the control command to the gas intake and discharge module to control the gas intake and discharge module to discharge the combustible gas. In a case that the ambient temperature is higher than the preset temperature threshold, the control module sends another control command to the fire extinguishing module to control the fire extinguishing module to perform cooling or fire extinguishing, and the alarm module alarms.

In step S22, real-time data of the ambient humidity collected by the humidity detection module is obtained. In a case that the ambient humidity is higher than a preset humidity threshold, the control module sends further another control command to the gas intake and discharge module to control the gas intake and discharge module to perform ventilation.

In summary, the present application has the following technical effects. The fire-fighting gas intake and discharge control system is a closed-loop system including the control module, the detection module, the gas intake and discharge module and the operation detection module, and has higher reliability than the existing gas intake and discharge system on the market. The system can record the environmental factors in the energy storage container in real time. The temperature, the gas concentration, the humidity and other environmental conditions in the energy storage container can be recorded regardless of whether the system takes action. Once the gas intake and discharge module is in operation, the maintenance worker can query the state of the gas intake and discharge module corresponding to an operating time, so as to primarily determine the fault in advance. Even if the fault information cannot be seen in time due to the various emergencies, the subsequent determination of the fault will not be affected. The system will perform self-checking at fixed time intervals, which greatly increases the reliability of the system. The existing gas intake and discharge system on the market does not have this function at all., the device is unused for a long term, and the system is inactive for a long period, making it impossible to promptly detect any problems; once the system needs to operate, while the device cannot operate due to a fault, it is likely to cause greater danger to the energy storage container. Compared with the existing gas intake and discharge system, the communication module is added to the fire-fighting gas intake and discharge control system to upload the environmental information in the energy storage container and the operation information of the gas intake and discharge module to the cloud, so that the maintenance worker can observe the condition in the energy storage container at any time, providing more reliable protection for the safety of the energy storage container. Moreover, the fire extinguishing module is further provided to timely cool the energy storage container or extinguish the fire, so as to avoid greater losses. Additionally, the system is applicable to various containers, and therefore has higher compatibility.

The control method for the self-checking fire-fighting gas intake and discharge control system is further provided according to the present application, which realizes the control of the gas intake and discharge module and the real-time monitoring of the operation state of the gas intake and discharge module, so that the system can operate more stably and reliably.

The fire-fighting gas intake and discharge control system of the present application is safer, more reliable, more versatile, and has a competitive cost compared with existing fans on the market.

The above embodiments merely describe the principles and effects of the present application in an illustrative manner, and are not intended to limit the present application. Those skilled in the art may modify or change the above embodiments without departing from the spirit and scope of the present application. Therefore, all equivalent modifications or changes made by a person of ordinary skill in the art without departing from the spirit and technical ideas disclosed in the present application shall still fall within the claims of the present application.

The description provides many specific details, such as examples of components and/or methods, to provide a complete understanding of the embodiments of the present application. However, those skilled in the art will understand that the embodiments of the present application can be implemented without one or more specific details or by other devices, systems, assemblies, methods, components, materials, parts, etc. In other cases, common structures, materials or operations are not specifically shown or described in detail to avoid obscuring the aspects of the embodiments of the present application.

Terms such as "one embodiment", "an embodiment", or "a specific embodiment" in this specification mean that a particular feature, structure, or characteristic described in conjunction with the embodiments is included in at least one embodiment of the present application, but not necessarily in all embodiments. Therefore, various appearances of the phrases "in one embodiment", "in an embodiment" or "in a specific embodiment" in the specification do not necessarily refer to the same embodiment. In addition, the particular feature, structure, or characteristic of any specific embodiment of the present application may be combined with one or more other embodiments in any proper manner. It should be understood that other variations and modifications made to the embodiments of the application described and illustrated herein may be inspired by the content herein and are regarded as a part of the spirit and scope of the present application.

It should also be understood that one or more of the elements shown in the drawings may be implemented in a more separate or more integrated manner, or even may be removed because they are inoperable in certain circumstances, or may be provided because they are useful based on specific applications.

In addition, unless otherwise explicitly indicated, any marking arrows in the drawings should be regarded as illustrative only and are not intended to limit. Additionally, unless otherwise specified, the term "or" used herein is generally intended to mean "and/or". When the term is foreseen because it is unclear to provide separation or combination capability, the combination of components or steps will also be deemed to have been specified.

As used in the description herein and throughout the claims hereinafter, unless otherwise indicated, terms "a" and "the" include plural references. Likewise, as used in the description herein and throughout the claims hereinafter, unless otherwise indicated, the meaning of "in" includes "inside" and "on".

The above description (including the content described in the abstract of the specification) of the embodiments of the present application is not intended to be exhaustive or to limit the present application in the precise form disclosed herein. Although the specific embodiments and the examples of the present application are described herein for the purpose of illustration only, as known and understood by those skilled in the art, various equivalent modifications may fall within the spirit and scope of the present application. As pointed out, these modifications may be made to the present application according to the above description of the embodiments of the present application, and these modifications will fall within the spirit and scope of the present application.

Details of the system and method are described herein for better understanding of the present application. In addition, various specific details are provided for an overall understanding of the embodiments of the application. However, those skilled in the art may understand that the embodiments of the present application may be implemented without one or more of the specific details, or be implemented based on other devices, systems, accessories, methods, assemblies, materials, parts, etc. In other cases, common structures, materials and/or operations are not particularly shown or described in detail to avoid confusion to various aspects of the embodiments of the application.

Therefore, although the present application is described herein according to specific embodiments thereof, freedom of modifications, various changes and substitutions are also within the above disclosure. It should be understood that in some cases, some features of the present application may be adopted without corresponding use of other features and without departing from the scope and spirit of this application. Therefore, many modifications may be made, so that specific environments or materials adapt to the substantial scope and spirit of the present application. The present application is not intended to be limited to the specific terms used in the claims hereinafter and/or the specific embodiments disclosed as the best way to carry out the present application, but any and all embodiments and equivalents falling within the scope of the claims are included in the present application. Thus, the scope of the present application is defined solely by the claims.

## Claims

1. A self-checking fire-fighting gas intake and discharge control system, configured for combustible gas detection in an energy storage container, comprising:
a gas detection module, configured to detect a combustible gas concentration in the energy storage container;
a gas intake and discharge module, configured to control ventilation in the energy storage container; and
a control module, configured to control operations of the gas detection module and the gas intake and discharge module, and control the gas intake and discharge module to discharge a combustible gas in a case that the combustible gas concentration exceeds a preset concentration threshold.

2. The fire-fighting gas intake and discharge control system according to claim 1, further comprising an operation detection module and an alarm module, wherein
the operation detection module is configured to detect an operation state of the gas intake and discharge module; and
the control module is further configured to control the alarm module to alarm in a case that the gas intake and discharge module operates abnormally.

3. The fire-fighting gas intake and discharge control system according to claim 2, wherein the gas intake and discharge module is mounted in the energy storage container, and comprises a louver device and a fan device.

4. The fire-fighting gas intake and discharge control system according to claim 3, wherein the operation detection module comprises a louver detection submodule and a fan detection submodule, wherein
the louver detection submodule is configured to determine the operation state of the gas intake and discharge module by detecting a state of a louver of the louver device; and
the fan detection submodule is configured to determine the operation state of the gas intake and discharge module by detecting current information and rotation speed information of the fan device.

5. The fire-fighting gas intake and discharge control system according to claim 4, wherein the louver detection submodule is configured to determine whether the louver is in an open state or a closed state by detecting a moving distance of a louver connecting rod of the louver device through a position sensor.

6. The fire-fighting gas intake and discharge control system according to claim 4, wherein the fan detection submodule is configured to monitor, through a current sensor provided on a power cable of a fan and a rotation speed feedback wire provided between a fan controller and the fan, a current value variation and a rotation speed variation of the fan device, to determine whether the fan device operates normally.

7. The fire-fighting gas intake and discharge control system according to claim 2, further comprising:
a temperature detection module, configured to detect a temperature in the energy storage container; and
a humidity detection module, configured to detect humidity in the energy storage container, wherein
the control module is further configured to control the gas intake and discharge module to operate in a case that the temperature exceeds a preset temperature threshold and/or the humidity exceeds a preset humidity range.

8. The fire-fighting gas intake and discharge control system according to claim 2, further comprising a communication module, wherein
the control module is configured to receive commands from an exterior through the communication module, and send state information of the energy storage container to the exterior; and wherein
the commands from the exterior comprise an operation command for controlling the gas intake and discharge module, and operation commands for controlling the gas detection module, the operation detection module, and a temperature detection module and/or a humidity detection module; and
the state information comprises the combustible gas concentration, a temperature in the energy storage container, humidity in the energy storage container and the operation state of the gas intake and discharge module.

9. The fire-fighting gas intake and discharge control system according to claim 8, wherein the control module is further configured to control the alarm module to alarm in a case that a communication abnormality occurs in the communication module.

10. The fire-fighting gas intake and discharge control system according to claim 8, wherein
the control module is configured to control operations of the gas intake and discharge module, the gas detection module, the operation detection module, and the temperature detection module and/or the humidity detection module according to the commands from the exterior received by the communication module; or
the control module is configured to control the operations of the gas intake and discharge module, the gas detection module, the operation detection module, and the temperature detection module and/or the humidity detection module at a preset time interval.

11. A control method of the self-checking fire-fighting gas intake and discharge system according to any one of claims 1 to 10, comprising:
obtaining real-time data of the combustible gas concentration collected by the gas detection module;
sending, by the control module in a case that the combustible gas concentration is higher than the preset concentration threshold, a control command to the gas intake and discharge module to control the gas intake and discharge module to discharge the combustible gas;
obtaining real-time data of the operation state of the gas intake and discharge module collected by the operation detection module; and
alarming by the alarm module in a case that the operation state is abnormal.

12. The control method according to claim 11, further comprising:
obtaining real-time data of an ambient temperature collected by a temperature detection module;
in a case that the ambient temperature is lower than a preset temperature threshold and the combustible gas concentration is higher than the preset concentration threshold, sending, by the control module, the control command to the gas intake and discharge module to control the gas intake and discharge module to discharge the combustible gas; and
in a case that the ambient temperature is higher than the preset temperature threshold, sending, by the control module, another control command to a fire extinguishing module to control the fire extinguishing module to perform cooling or fire extinguishing, and alarming by the alarm module.

13. The control method according to claim 11, further comprising:
obtaining real-time data of ambient humidity collected by a humidity detection module; and
sending, by the control module in a case that the ambient humidity is higher than a preset humidity threshold, another control command to the gas intake and discharge module to control the gas intake and discharge module to perform ventilation.
